# EUROPEAN PATENT SPECIFICATION

(11) **EP 4 208 790 B1**
(45) Date of publication and mention of the grant of the patent: **11.11.2026**
(21) Application number: 20780180.4
(22) Date of filing: 24.09.2020
(51) Int. Cl.: G06F 11/1446, G06F 3/06, G06F 16/174

(54) **DATA BACKUP SYSTEM AND METHOD IN FIXED SIZE DEDUPLICATION SYSTEMS**
DATENSICHERUNGSSYSTEM UND -VERFAHREN IN DEDUPLIZIERUNGSSYSTEMEN FESTER GRÖSSE
SYSTÈME ET PROCÉDÉ DE SAUVEGARDE DE DONNÉES DANS DES SYSTÈMES DE DÉDUPLICATION DE TAILLE FIXE

(43) Date of publication of application: 12.07.2023
(73) Proprietor: Huawei Technologies Co., Ltd., Shenzhen, Guangdong 518129 (CN)
(72) Inventor: NATANZON, Assaf, 80992 Munich (DE)
(74) Representative: Maiwald GmbH
(86) International application number: PCT/EP2020/076706
(87) International publication number: WO 2022/063402

(56) References cited:
- US-A1- 2020 034 452
- SONAM MANDAL ET AL: "Using Hints to Improve Inline Block-Layer Deduplication", 22 February 2016 (2016-02-22), pages 322 - 329, XP061024909, Retrieved from the Internet <URL:https://www.usenix.org/sites/default/files/fast16_full_proceedings_interior.pdf> [retrieved on 20160222]
- LU HONGLI ET AL: "Efficient Online Stream Deduplication for Network Block Storage", 2018 IEEE INTL CONF ON PARALLEL & DISTRIBUTED PROCESSING WITH APPLICATIONS, UBIQUITOUS COMPUTING & COMMUNICATIONS, BIG DATA & CLOUD COMPUTING, SOCIAL COMPUTING & NETWORKING, SUSTAINABLE COMPUTING & COMMUNICATIONS (ISPA/IUCC/BDCLOUD/SOCIALCOM/SUSTAINC, 11 December 2018 (2018-12-11), pages 111 - 119, XP033531181, DOI: 10.1109/BDCLOUD.2018.00029

## Description

### TECHNICAL FIELD

Aspects relate, in general, to data backup and more specifically, although not exclusively to a data backup method for optimization of differential compression in fixed size deduplication systems.

### BACKGROUND

Deduplicated data systems are often able to reduce the amount of space required to store data by recognizing redundant data patterns. For example, a deduplicated data system may reduce the amount of space required to store similar files by dividing the files into chunks and storing only unique chunks. As such, a deduplicated file may consist of a list of chunks that make up the file.

Some systems divide data into fixed-width chunks. Unfortunately, this approach may result in large amounts of identical information that will not be deduplicated. For example, a long sequence of data in one file may begin at a fixed-width chunk boundary of the file, while the same long sequence of data may begin in the middle of a fixed-width chunk of another file, resulting in no identical fixed-width chunks that may be deduplicated between the two files.

In order to facilitate the deduplication of identical sequences of data at arbitrary offsets within files, some traditional deduplicated data systems may divide files into variable-width chunks. This often requires an undesirable amount of overhead to maintain metadata relating to the deduplicated data.

To overcome some of these issues, similarity (or differential) compression algorithms can be implemented in which similarity hash functions are applied to data blocks. A generated similarity hash for a block can be compared to that of stored parent blocks to determine a degree of similarity between the blocks. Thus, for each block, if a similar block is found the system can keep the compressed difference between the two rather than storing the entire block again.

For example, the parent block can be compressed and for each new and similar block the compressed difference can be stored. Alternatively, multiple similar blocks can be compressed together resulting in higher compression ratios. However, this results in much larger decompression demands when retrieving a block. Furthermore, the amount of metadata required in differential compression implementations does not allow the system to keep the data structures associated with the process in memory and thus the system needs to first store the data and is only able to process the data and perform the differential decompression afterwards.

US 2020/034452 A1 describes dual layer deduplication for a file system running over a deduplicated block storage. SONAM MANDAL ET AL: "Using Hints to Improve Inline Block-Layer Deduplication", USENIX, USENIX, THE ADVANCED COMPUTING SYSTEMS ASSOCIATION, 22 February 2016 (2016-02-22), pages 322-329, XP061024909, describes using hints to improve inline block-layer deduplication.

### SUMMARY

The invention is defined by the independent claims. Preferred embodiments are defined by the dependent claims. According to a first aspect, there is provided a computer-implemented data backup method, the method comprising storing metadata associated with an object in a secondary storage layer of a backup system, the metadata representing a data structure for the object, dividing a set of data representing the object into multiple variable length chunks, determining whether an existing chunk of data that is the same as at least a part of the variable length chunk exists in a primary storage layer of the backup system, storing the variable length chunk in the primary storage layer of the backup system, and on the basis of the determination, providing the primary storage layer of the backup system with an indication of the location of the existing chunk of data.

Metadata representing the structure of the object is maintained in a secondary storage system whilst the object data itself is split into variable length chunks for storage at a primary storage system. A check is performed on the primary storage system to determine the presence (or not) of a variable length chunk - if such data is found, then the data is written as normal to the primary storage system but an indication as to the location of the existing data is also provided. In this way, the primary storage system performs differential compression or deduplication of the variable length chunk (or the existing chunk data). Provision of the metadata associated with the object in the secondary layer enables the object to be restored or, e.g., accessed or mounted, directly from the primary storage without the need for recourse to a backup application since the variable length chunks are written to the primary storage in raw format as opposed to a proprietary deduplication format comprehensible only to a backup application.

In an implementation of the first aspect, the variable length chunk can be stored in the primary layer of the backup system in one or more fixed-size and aligned blocks, and the existing chunk of data can comprise one or more fixed-size and aligned blocks. The variable length chunk is stored in the primary layer of the backup system in the form of differentials between fixed-size and aligned blocks.

That is, the variable length chunk of data can be split in multiple fixed sized blocks for efficient storage on the primary layer of the backup system. Accordingly, efficient inline deduplication and differential compression may be performed, providing improved compression ratios and reduced computation.

In an implementation of the first aspect, the variable length chunk is compressed at the primary storage layer of the backup system on the basis of the determination. Compressing the variable length chunk comprises differentially compressing the difference between the variable length chunk and the existing chunk of data. A reference to the existing chunk of data for use by the secondary storage layer of a backup system can be generated, whereby to enable deduplication of the variable length chunk.

In the event that a variable length chunk of data is already provided in the primary storage, and according to the extent to which that existing data maps to the variable length chunk in terms of offset etc., the primary storage is able to perform differential compression, or deduplication. A reference to the existing chunk can be provided at the location of the variable length chunk to enable direct access to the object from the primary storage.

According to a second aspect, there is provided a non-transitory machine-readable storage medium comprising machine-readable instructions which, when executed by a processor, cause the machine to execute a backup task to store metadata associated with an object in a secondary storage layer of a backup system, the metadata representing a data structure for the object, divide a set of data representing the object into multiple variable length chunks, determine whether an existing chunk of data that is the same as at least a part of a variable length chunk exists in a primary storage layer of the backup system, store the variable length chunk in the primary storage layer of the backup system, and on the basis of the determination, provide the primary storage layer of the backup system with an indication of the location of the existing chunk of data.

In an implementation of the second aspect, the non-transitory machine-readable storage medium comprises further instructions to analyse the variable length chunk for duplicates at a time of writing it to the primary storage layer of the backup system. Further instruction is provided to divide the variable length chunk into one or more fixed size aligned blocks of data with a predetermined length. Further instruction is provided to differentially compress the difference between the variable length chunk and the existing chunk of data, and store the result of the differential compression in a fixed size aligned block in the primary storage layer of the backup system. Further instruction is provided to generate a write command for the primary layer of the backup system including a logical unit and offset associated with the existing chunk of data.

### BRIEF DESCRIPTION OF THE DRAWINGS

For a more complete understanding of the present disclosure, reference is now made, by way of example only, to the following descriptions taken in conjunction with the accompanying drawings, in which:
- Figure 1: is a schematic representation of a system implementing a data backup method according to an example;
- Figure 2: is a schematic representation of a data backup method according to an example;
- Figure 3: is a flowchart of a data backup method according to an example; and
- Figure 4: is a schematic representation of a machine forming a data backup system according to an example.

### DESCRIPTION

Example embodiments are described below in sufficient detail to enable those of ordinary skill in the art to embody and implement the systems and processes herein described. It is
important to understand that embodiments can be provided in many alternate forms and should not be construed as limited to the examples set forth herein. Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In some backup systems, inline variable length deduplication can be performed in which data is chunked (or divided) into multiple variable size chunks. Data structures that enable checks to be performed to determine whether the data is already available are stored. If the data is available, it will not be stored again and other meta data will be stored. For example, in a set of data representing an object, repeated non-overlapping subparts (chunks) can be found and replaced with index values that are smaller in size than the original chunks.

However, an issue with such an approach is that the data is kept in a deduplication format in the storage and is therefore not optimized for retrieval, especially if lower layer storage of the system is also performing deduplication and compression (such as fixed size de-duplication for example). Furthermore, the data cannot be read or mounted directly from the storage without appropriate backup software.

According to an example, a data backup method is provided in which metadata used by a variable length deduplication system can be stored. A backup application of the system can perform data chunking and determine the presence of similarities between chunks of data. However, instead of storing the data in a special or proprietary de-duplicated format for example, the data can be written to a, e.g., block storage layer in a standard (raw) format as if there was no backup application in operation. The backup system provides an indication of the location of an existing chunk of data to the block storage layer, which can then use the indication provided to perform, e.g., differential compression (and possibly even deduplication if offsets are aligned). Thus, in effect, a hint is provided to the lower level storage, such as a primary storage layer of a backup system, which tells it that the data that was just written was already written in the system along with the location where the date was written.

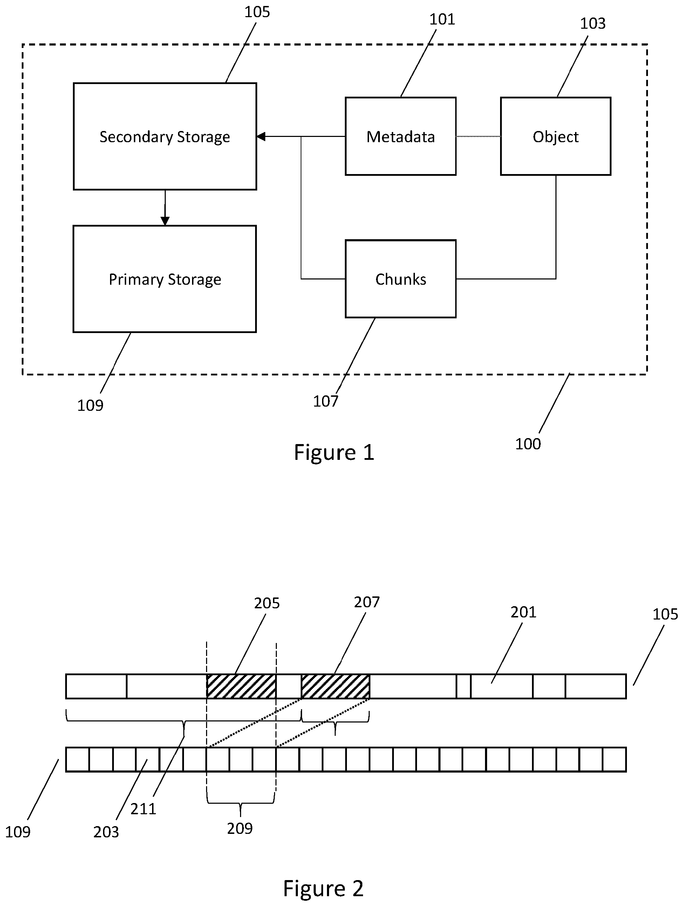

Figure 1 is a schematic representation of a system implementing a data backup method according to an example. Metadata 101 associated with an object 103 is stored in a secondary storage layer 105 of a backup system 100. In an example, the metadata 101 represents a data structure for the object 103. The metadata 101 can be in the form of a set of name-value pairs or can comprise information about data containers with indications as to how objects are structured (e.g., how values are ordered to form records). The metadata 101 can therefore describe the types, versions, relationships and other characteristics of data.

In an example, a set of data representing the object 103 is divided or chunked into multiple variable length chunks 107. The set of data representing the object 103 is split into variable length chunks, the size of which being defined by some internal features of the data. That is, a content-aware process may be used to divide the data into multiple variable length chunks.

The system 100 determines whether an existing chunk of data that is the same as at least a part of another variable length chunk exists in a primary (e.g., block) storage layer 109 of the backup system 100. The variable length chunk 107 is stored in the primary storage layer of the backup system, and on the basis of the determination, the primary storage layer 109 of the backup system is provided with an indication of the location of the existing chunk of data. That is, the system 100 implements a variable length deduplication solution for secondary storage (or backup software), that can leverage differential compression provided by lower level block storage 109. Thus, in an example, primary storage 109 can be block storage, which supports fixed size de-duplication with differential compression. Metadata 101 for data stored in the primary storage layer 109 is provided in a secondary storage layer 105 that enables direct access to the data on the primary storage layer (e.g., such data can be mounted) without the need for an intermediate backup system (i.e. without the need for a system that works only on a proprietary form of data on the primary storage layer).

According to an example, a variable length chunk 107 is stored in the primary layer 109 of the backup system 100 in one or more fixed-size and aligned blocks. The start of the variable length chunk 107 does not necessarily start at a beginning of a fixed size block and the end of the variable length chunk 107 does not necessarily end at the end of a fixed sized block. That is, a variable length chunk may be stored as part of one or more fixed size and aligned blocks, but there may be a trailer at the beginning of the first block and a trailer at the end of the last block that do not belong to the variable sized chunk. In the case that the variable length chunk is aligned there is no need for the delta compression. Similarly, an existing chunk of data, if present, can be stored in the form of one or more fixed-size and aligned blocks. In order to provide efficient inline deduplication and differential compression thereby providing improved compression ratios and reduced computation, the variable length chunk of data can thus be split in or across multiple fixed sized blocks for efficient storage on the primary layer of the backup system where it may be stored in the form of differentials between fixed-size and aligned blocks. Thus, a variable length chunk may be compressed at the primary storage layer of the backup system on the basis of the determination. In an example, the variable length chunk can be compressed by differentially compressing the difference between the variable length chunk and the existing chunk of data.

Advantageously, a reference to the existing chunk of data can be generated and provided for use by the secondary storage layer of the backup system, whereby to enable deduplication of the variable length chunk. Thus, in the event that a variable length chunk of data is already provided in the primary storage, and according to the extent to which that existing data maps to the variable length chunk in terms of offset etc., the primary storage may be able to perform differential compression, or deduplication. A reference to the existing chunk can be provided at the location of the variable length chunk to enable direct access to the object from the primary storage.

Figure 2 is a schematic representation of a data backup method according to an example. An object 103 is split into multiple variable length chunks 201. Metadata associated with the object is stored in the secondary storage layer 105 of the backup system 100. As noted above, the metadata 101 represent a data structure for the object. Each variable length chunk 201 is stored in the secondary storage layer 105 of backup system 100. For example, the variable length chunks 107 may be stored and, in an example, deduplication may be performed on these chunks stored in the secondary storage layer.

Differential compression provided by the primary storage layer 109 of the backup system is leveraged. In the example of figure 2, each variable size chunk from the secondary storage layer is written to the primary storage layer 105 in a standard raw format (as if there was no backup application present) over fixed size blocks 203. For example, the variable length chunks 211 are written to the primary storage layer in the form of multiple fixed sized blocks 203. In the example of figure 2, two instances (205, 207) of the same variable sized chunk are present in the data to be backed up from the secondary storage layer. Accordingly, whilst both instances are stored in fixed sized blocks 203 in the primary storage layer 109, a reference to or indication of the location or presence of the first instance (209) of chunk 205 is provided to the primary storage layer 109. The lower level (primary) storage layer then uses this information in order to perform differential compression, or deduplication in respect of the chunk 207. That is, the data to be backed up is stored as originally provided. Accordingly, if a logical unit is backed up at an offset 'x', it will also be stored at offset 'x'. Thus, variable sized chunks are stored according to the offset that they were originally written with, but, advantageously a 'hint' is provided to the primary storage layer (i.e., a reference to the existing chunk of data). The reference (or indication) enables the primary storage layer to determine that two variable sized chunks are identical but that they may be provided at different offsets. For example, one variable sized chunk may be aligned to an 8KB block and end at an offset of 5KB to another 8KB block. Or, for example, one variable sized chunk may start at an offset of 1KB from the beginning of an 8KB block and end at offset of 6KB from of another 8KB block. According to an example, when writing data to the primary storage layer 109 from the secondary storage layer 105, a write command can be implemented in the form:
write(LUN, data, offset, length, otherLU, otherOffset)
where 'LUN' is a logical unit number providing an identifier for a chunk of data to be written, 'data' is the data chunk to be written (i.e. a portion of data to be written, such as 205 for example), 'offset' provides data representing the position of the chunk relative to, e.g., a preceding chunk, and 'length' provides a measure of the length of the chunk in question. In the context of figure 2, for example, 'other LUN' and 'otherOffset' provide information relating to the location of the existing data. That is, the write command provides information to enable the chunk under consideration (e.g. chunk 207) to be validly written to the primary storage layer, whilst also providing information specifying the identification and location of existing data (e.g. chunk 205) in the primary storage layer that is the same as the chunk being written.

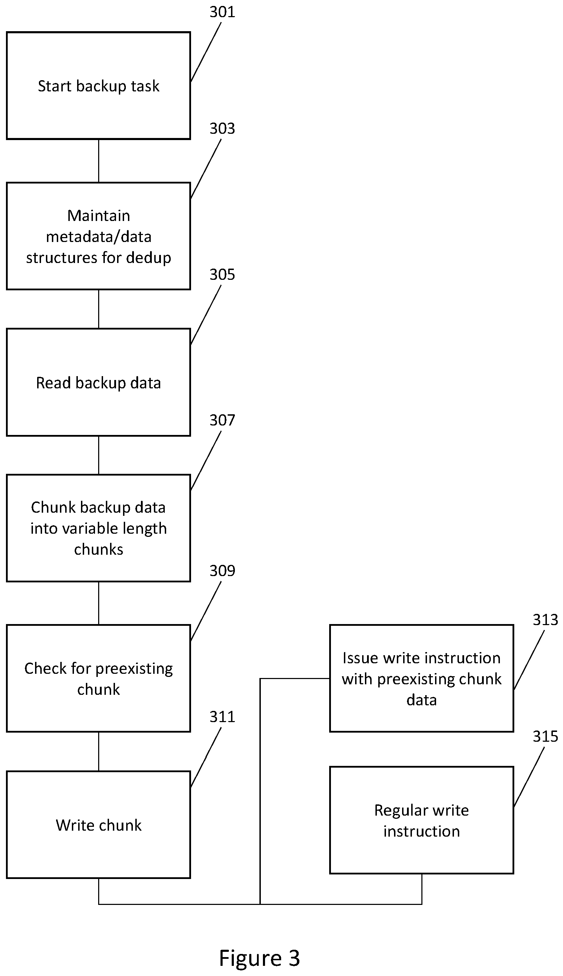

The fact that the data structure is provided in higher level (i.e. secondary storage layer) of the system enables the system to perform inline differential compression. However, further advantageously, in terms of the lower layer (i.e. primary storage payer) of the system, inline deduplication and differential compression can be performed, thereby providing improved compression ratios, less computation and less write amplification (since the deduplication is inline. The data provided in the primary storage layer is maintained in a raw format, i.e., not in a format that is proprietary to a backup application for example. Whilst the same compression ratios are maintained, the beneficial effect of this is that data restoration can be performed without recourse to a backup application. For example, if the data in question if in the form of a virtual machine (VM), the VM can simply be executed directly from the primary storage. Figure 3 is a flowchart of a data backup method according to an example. In block 301 a backup task starts (e.g. backing up a VM). In block 303, a backup system maintains all the data structures required for deduplication of data to be backed up. In an example, the backup system can comprise a backup application that has access to the primary and secondary storage layers, such as that described with reference to figures 1 and 2.

In block 305, the backup application can read the backup data (i.e., data to be backed up) from an application host. In block 307, the backup data is chunked into variable length chunks. Any suitable chunking method can be used to generate variable length chunks from the data to be backed up. For example, as noted above, a content dependent variable chunking method can be used. In block 309, for each chunk, the backup application checks the stored metadata representing a data structure for the data backed up to determine whether a chunk of data with the same data already exists, i.e., whether a chunk comprising the same data as that currently under consideration has been backed up already. The comparison can be performed using, for example, a comparison of signatures generated from chunks of data using a hash signature mechanism such as, e.g., MD5, sha2, and so on.

In block 311, data read from the backup application, i.e. the chunk, is written with the same offset to a target storage system, which in the examples of figures 1 to 3 is the primary storage layer 109. That is, for example, if a VM file is backed up, the data will be written to a VM file of the same size in the backup and with the same offset that the original data was read. In block 313, if it determined that the chunk already exists (i.e., there is a chunk comprising the same data as that to be written) the backup application can issue a write (such as that described above) indicating where the identical data is suspected to already been written. Conversely, in block 315, if the chunk does not exist a regular write can be used.

Thus, on the primary storage layer, when a write arrives, if it has the same offset as suspected identical data, the storage system can perform differential compression of the new data written compared to the data that is written in the reference offset.

Examples in the present disclosure can be provided as methods, systems or machine-readable instructions, such as any combination of software, hardware, firmware or the like. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a general-purpose computer, a special purpose computer, an embedded processor or processors of other programmable data processing devices to realize the functions described in the description and diagrams. In particular, a processor or processing apparatus may execute the machine-readable instructions. Thus, modules of apparatus (for example, a module implementing a function to compare signatures associated with data chunks) may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode. For example, the instructions may be provided on a non-transitory computer readable storage medium encoded with instructions, executable by a processor.

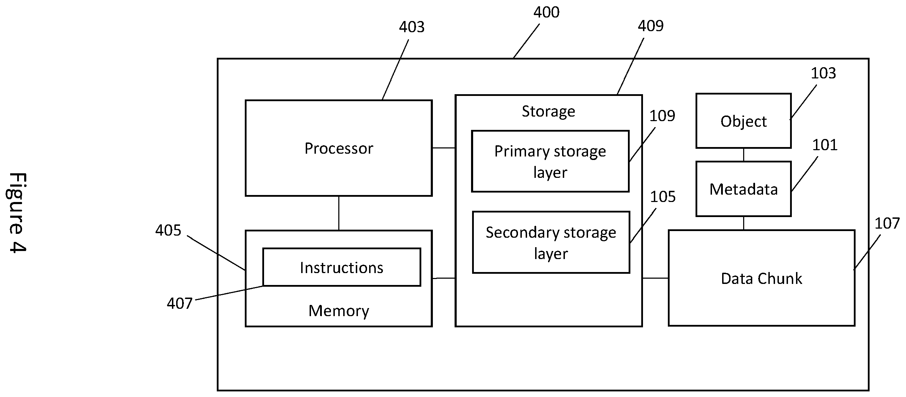

Figure 4 is a schematic representation of a machine forming a data backup system according to an example. System 400 comprises a processor 403 and a memory 405 storing instructions 407. A storage 409 can be provided. Storage 409 can comprise a primary storage layer 109 and a secondary storage layer 105. Alternatively, one, other or both of the primary and secondary storage layers can be provided on separate storage apparatus of the system 400.

The instructions 407 are executable by the processor 403. The instructions 407 can comprise instructions to cause the machine to execute a backup task. In an example, the instructions 407 can comprise instructions to store metadata associated with an object in a secondary storage layer of the backup system, the metadata representing a data structure for the object, divide a set of data representing the object into multiple variable length chunks, determine whether an existing chunk of data that is the same as at least a part of a variable length chunk exists in a primary storage layer of the backup system, store the variable length chunk in the primary storage layer of the backup system, and on the basis of the determination, provide the primary storage layer of the backup system with an indication of the location of the existing chunk of data.

Accordingly, the system 400 can implement a method for data backup. Such machine-readable instructions may also be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer software product, the computer software product being stored in a storage medium and comprising a plurality of instructions for making a computer device implement the methods recited in the examples of the present disclosure.

In some examples, all or a portion of exemplary system 100 in figure 1 may represent portions of a cloud-computing or network-based environment. Cloud-computing environments may provide various services and applications via the Internet. These cloud-based services (e.g., software as a service, platform as a service, infrastructure as a service, etc.) may be accessible through a web browser or other remote interface. Various functions described herein may be provided through a remote desktop environment or any other cloud-based computing environment.

While various embodiments have been described and/or illustrated herein in the context of fully functional computing systems, one or more of these exemplary embodiments may be distributed as a program product in a variety of forms, regardless of the particular type of computer-readable-storage media used to actually carry out the distribution. The embodiments disclosed herein may also be implemented using software modules that perform certain tasks. These software modules may include script, batch, or other executable files that may be stored on a computer-readable storage medium or in a computing system. In some embodiments, these software modules may configure a computing system to perform one or more of the exemplary embodiments disclosed herein.

In addition, one or more of the modules described herein may transform data, physical devices, and/or representations of physical devices from one form to another. For example, one or more of the modules recited herein may transform a computing device into a device for variable-length chunking for deduplication. As another example, one or more of the modules described herein may transform a volume of data into a volume of deduplicated variable-length data chunks.

The preceding description has been provided to enable others skilled in the art to best utilize various aspects of the exemplary embodiments disclosed herein. This exemplary description is not intended to be exhaustive or to be limited to any precise form disclosed. The embodiments disclosed herein should be considered in all respects illustrative and not restrictive. Reference should be made to the appended claims in determining the scope of the instant disclosure.

## Claims

1. A computer-implemented data backup method, the method comprising:
storing metadata (101) associated with an object (103) in a secondary storage layer (105) of a backup system, the metadata (101) representing a data structure for the object (103);
dividing a set of data representing the object (103) into multiple variable length chunks (107);
determining whether an existing chunk (107) of data that is the same as at least a part of the variable length chunk (107) exists in a primary storage layer (109) of the backup system;
storing the variable length chunk (107) in the primary storage layer (109) of the backup system;
**characterized by**,
on the basis of the determination, providing the primary storage layer (109) of the backup system with an indication of the location of the existing chunk (107) of data;
compressing the variable length chunk (107) at the primary storage layer (109) of the backup system on the basis of the determination;
wherein compressing the variable length chunk (107) comprises differentially compressing the difference between the variable length chunk (107) and the existing chunk (107) of data.

2. The backup method as claimed in claim 1, wherein the variable length chunk (107) is stored in the primary layer of the backup system in one or more fixed-size and aligned blocks (203), and wherein the existing chunk (107) of data comprises one or more fixed-size and aligned blocks (203).

3. The backup method as claimed in claim 1, wherein the variable length chunk (107) is stored in the primary layer of the backup system in the form of differentials between fixed-size and aligned blocks (203).

4. The backup method as claimed in any preceding claim, further comprising:
generating a reference to the existing chunk (107) of data for use by the secondary storage layer (105) of a backup system, wherein the reference is used to deduplicate the variable length chunk (107).

5. A non-transitory machine-readable storage medium comprising machine-readable instructions which, when executed by a processor, cause the machine to execute a backup task to:
store metadata (101) associated with an object (103) in a secondary storage layer (105) of a backup system, the metadata (101) representing a data structure for the object (103);
divide a set of data representing the object (103) into multiple variable length chunks (107);
determine whether an existing chunk (107) of data that is the same as at least a part of a variable length chunk (107) exists in a primary storage layer (109) of the backup system;
store the variable length chunk (107) in the primary storage layer (109) of the backup system;
**characterized by** further causing the machine to execute the backup task to,
on the basis of the determination, provide the primary storage layer (109) of the backup system with an indication of the location of the existing chunk (107) of data;
divide the variable length chunk (107) into one or more fixed size aligned blocks (203) of data with a predetermined length;
differentially compress the difference between the variable length chunk (107) and the existing chunk (107) of data; and
store the result of the differential compression in a fixed size aligned block (203) in the primary storage layer (109) of the backup system.

6. The non-transitory machine-readable storage medium as claimed in claim 5, further comprising instructions to:
analyse the variable length chunk (107) for duplicates at a time of writing it to the primary storage layer (109) of the backup system.

7. The non-transitory machine-readable storage medium as claimed in any of claims 5 to 6, further comprising instructions to:
generate a write command for the primary layer of the backup system including a logical unit and offset associated with the existing chunk (107) of data.

## Patentansprüche

1. Computerimplementiertes Datensicherungsverfahren, wobei das Verfahren Folgendes umfasst:
Speichern von Metadaten (101), die mit einem Objekt (103) verknüpft sind, in einer sekundären Speicherschicht (105) eines Sicherungssystems, wobei die Metadaten (101) eine Datenstruktur für das Objekt (103) darstellen;
Aufteilen eines Datensatzes, der das Objekt (103) darstellt, in mehrere Chunks (107) variabler Länge;
Bestimmen, ob ein vorhandener Chunk (107) von Daten, der mit mindestens einem Teil des Chunks (107) variabler Länge übereinstimmt, in einer primären Speicherschicht (109) des Sicherungssystems vorhanden ist;
Speichern des Chunks (107) variabler Länge in der primären Speicherschicht (109) des Sicherungssystems;
**gekennzeichnet durch**,
auf Grundlage der Bestimmung, Bereitstellen für die primäre Speicherschicht (109) des Sicherungssystems einer Angabe des Speicherorts des vorhandenen Chunks (107) von Daten;
Komprimieren des Chunks (107) variabler Länge auf der primären Speicherschicht (109) des Sicherungssystems auf Grundlage der Bestimmung;
wobei das Komprimieren des Chunks (107) variabler Länge differentielles Komprimieren der Differenz zwischen dem Chunk (107) variabler Länge und dem vorhandenen Chunk (107) von Daten umfasst.

2. Sicherungsverfahren nach Anspruch 1, wobei der Chunk (107) variabler Länge in der primären Schicht des Sicherungssystems in einem oder mehreren ausgerichteten Blöcken (203) fester Größe gespeichert ist und wobei der vorhandene Chunk (107) von Daten einen oder mehrere ausgerichtete Blöcke (203) fester Größe umfasst.

3. Sicherungsverfahren nach Anspruch 1, wobei der Chunk (107) variabler Länge in der primären Schicht des Sicherungssystems in Form von Differenzen zwischen Blöcken (203) fester Größe und ausgerichteten Blöcken gespeichert ist.

4. Sicherungsverfahren nach einem der vorhergehenden Ansprüche, ferner umfassend:
Erzeugen eines Verweises auf den vorhandenen Chunk (107) von Daten zur Verwendung durch die sekundäre Speicherschicht (105) eines Sicherungssystems, wobei der Verweis dazu verwendet wird, den Chunk (107) variabler Länge zu deduplizieren.

5. Nichtflüchtiges, maschinenlesbares Speichermedium, das maschinenlesbare Anweisungen umfasst, die, wenn sie von einem Prozessor ausgeführt werden, die Maschine dazu veranlassen, eine Sicherungsaufgabe zu Folgendem auszuführen:
Speichern von Metadaten (101), die mit einem Objekt (103) verknüpft sind, in einer sekundären Speicherschicht (105) eines Sicherungssystems, wobei die Metadaten (101) eine Datenstruktur für das Objekt (103) darstellen;
Aufteilen eines Datensatzes, der das Objekt (103) darstellt, in mehrere Chunks (107) variabler Länge;
Bestimmen, ob ein vorhandener Chunk (107) von Daten, der mit mindestens einem Teil eines Chunks (107) variabler Länge identisch ist, in einer primären Speicherschicht (109) des Sicherungssystems vorhanden ist;
Speichern des Chunks (107) variabler Länge in der primären Speicherschicht (109) des Sicherungssystems;
**gekennzeichnet dadurch, dass** es die Maschine ferner dazu veranlasst, die Sicherungsaufgabe zu Folgendem auszuführen:
auf Grundlage der Bestimmung, Bereitstellen für die primäre Speicherschicht (109) des Sicherungssystems einer Angabe des Speicherorts des bestehenden Chunks (107) von Daten;
Aufteilen des Chunks (107) variabler Länge in einen oder mehrere ausgerichtete Blöcke (203) von Daten fester Größe mit einer vorbestimmten Länge;
differentielles Komprimieren der Differenz zwischen dem Chunk (107) variabler Länge und dem vorhandenen Chunk (107) von Daten; und
Speichern des Ergebnisses der differentiellen Komprimierung in einem ausgerichteten Block (203) fester Größe in der primären Speicherschicht (109) des Sicherungssystems.

6. Nichtflüchtiges maschinenlesbares Speichermedium nach Anspruch 5, ferner umfassend Anweisungen zum:
Analysieren des Chunks (107) variabler Länge auf Duplikate zu einem Zeitpunkt seines Schreibens in die primäre Speicherschicht (109) des Sicherungssystems.

7. Nichtflüchtiges maschinenlesbares Speichermedium nach einem der Ansprüche 5 bis 6, ferner umfassend Anweisungen zum:
Erzeugen eines Schreibbefehls für die primäre Schicht des Sicherungssystems, einschließlich einer logischen Einheit und eines Offsets, die mit dem vorhandenen Chunk (107) von Daten verknüpft sind.

## Revendications

1. Procédé de sauvegarde de données mis en œuvre par ordinateur, le procédé comprenant :
le stockage de métadonnées (101) associées à un objet (103) dans une couche de stockage secondaire (105) d'un système de sauvegarde,
les métadonnées (101) représentant une structure de données pour l'objet (103) ;
la division d'un ensemble de données représentant l'objet (103) en plusieurs fragments de longueur variable (107) ;
le fait de déterminer si un fragment de données existant (107) identique à au moins une partie du fragment de longueur variable (107) existe dans une couche de stockage primaire (109) du système de sauvegarde ;
le stockage du fragment de longueur variable (107) dans la couche de stockage primaire (109) du système de sauvegarde ;
**caractérisé par**,
sur la base de la détermination, la fourniture, à la couche de stockage primaire (109) du système de sauvegarde, d'une indication de l'emplacement du fragment de données existant (107) ;
la compression du fragment de longueur variable (107) au niveau de la couche de stockage primaire (109) du système de sauvegarde sur la base de la détermination ;
dans lequel la compression du fragment de longueur variable (107) comprend la compression différentielle de la différence entre le fragment de longueur variable (107) et le fragment de données existant (107).

2. Procédé de sauvegarde selon la revendication 1, dans lequel le fragment de longueur variable (107) est stocké dans la couche primaire du système de sauvegarde dans un ou plusieurs blocs alignés de taille fixe (203), et dans lequel le fragment de données existant (107) comprend un ou plusieurs blocs alignés de taille fixe (203).

3. Procédé de sauvegarde selon la revendication 1, dans lequel le fragment de longueur variable (107) est stocké dans la couche primaire du système de sauvegarde sous la forme de différentiels entre des blocs alignés de taille fixe (203).

4. Procédé de sauvegarde selon une quelconque revendication précédente, comprenant en outre :
la génération d'une référence au fragment de données existant (107) à utiliser par la couche de stockage secondaire (105) d'un système de sauvegarde, dans lequel la référence est utilisée pour dédupliquer le fragment de longueur variable (107).

5. Support de stockage non transitoire lisible par machine comprenant des instructions lisibles par machine qui, lorsqu'elles sont exécutées par un processeur, amènent la machine à exécuter une tâche de sauvegarde afin de :
stocker des métadonnées (101) associées à un objet (103) dans une couche de stockage secondaire (105) d'un système de sauvegarde, les métadonnées (101) représentant une structure de données pour l'objet (103) ;
diviser un ensemble de données représentant l'objet (103) en plusieurs fragments de longueur variable (107) ;
déterminer si un fragment de données existant (107) identique à au moins une partie d'un fragment de longueur variable (107) existe dans une couche de stockage primaire (109) du système de sauvegarde ;
stocker le fragment de longueur variable (107) dans la couche de stockage primaire (109) du système de sauvegarde ;
**caractérisé par** le fait d'amener en outre la machine à exécuter la tâche de sauvegarde afin de,
sur la base de la détermination, fournir à la couche de stockage primaire (109) du système de sauvegarde une indication de l'emplacement du fragment de données existant (107) ;
diviser le fragment de longueur variable (107) en un ou plusieurs blocs de données alignés de taille fixe (203) selon une longueur prédéterminée ;
compresser de manière différentielle la différence entre le fragment de longueur variable (107) et le fragment de données existant (107) ; et
stocker le résultat de la compression différentielle dans un bloc aligné de taille fixe (203) dans la couche de stockage primaire (109) du système de sauvegarde.

6. Support de stockage non transitoire lisible par machine selon la revendication 5, comprenant en outre des instructions pour : analyser le fragment de longueur variable (107) pour les doublons au moment de son écriture dans la couche de stockage primaire (109) du système de sauvegarde.

7. Support de stockage non transitoire lisible par machine selon l'une quelconque des revendications 5 ou 6, comprenant en outre des instructions pour :
générer une commande d'écriture pour la couche primaire du système de sauvegarde, comportant une unité logique et un décalage associés au fragment de données existant (107).
